# EUROPEAN PATENT SPECIFICATION

(11) **EP 4 311 695 B1**
(45) Date of publication and mention of the grant of the patent: **03.06.2026**
(21) Application number: 23187448.8
(22) Date of filing: 25.07.2023
(51) Int. Cl.: B60C 23/00

(54) **VEHICLE TYRE PRESSURE CONTROL SYSTEM**
REIFENDRUCKKONTROLLSYSTEM FÜR FAHRZEUGE
SYSTÈME DE COMMANDE DE PRESSION DE PNEUMATIQUE DE VÉHICULE

(30) Priority: 27.07.2022 ES 202230685
(43) Date of publication of application: 31.01.2024
(73) Proprietor: Accesorios y Elevadores Valencia, S.L., 46530 Puzol (Valencia) (ES)
(72) Inventor: MORENO IBAÑEZ, ALBERTO, 46530 Valencia (ES)
(74) Representative: Isern Patentes y Marcas S.L.

(56) References cited:
- US-A1- 2021 064 068

## Description

### OBJECT OF THE INVENTION

The object of the present invention application is to register a vehicle tyre pressure control system, incorporating notable innovations and advantages compared to techniques used hitherto.

More specifically, the invention proposes the development of a vehicle tyre pressure control system, which, due to its particular arrangement, allows free inflation and also partial and controlled deflation of vehicle tyres in relation to a preset inflation pressure in a simple, practical and effective manner.

### BACKGROUND OF THE INVENTION

Tyre pressure refilling systems are known in the current state of the art, mainly for industrial vehicles.

These known systems maintain tyre pressure within preset ranges to minimise tyre wear, minimise fuel consumption, and prevent possible blowouts.

These systems introduce air into the tyre where a leak has occurred due to a puncture, for example, even with the vehicle running, so that it can temporarily continue on its way and warns the driver about the issue, thus avoiding the danger and difficulties of having to stop on the spot to change a wheel.

Such already known systems basically consist of a pressure control box, pipes to bring the air to the tyres, a rotor-stator pair for each tyre with air passage to a rotating element, connection hoses between the rotor and the inflation valve for each tyre and light indications to warn of refilling and system failure.

An example of this may be the document US2021/0064068A1, which is related to automatic tire inflation (AT) systems, including systems for controlling pressure in tires.

However, all these known systems exhibit a number of relevant limitations.

Most of the systems known in the state of the art include non-return valves in the hoses that lead the air from the rotors to the inflation valves of each tyre, so that the air can enter the inflated tyre, but is not able to exit for a deflation.

These non-return valves are a safety measure, since they prevent all the tyres from deflating if one of them suffers a large loss of air, for example, a blowout, since the air conduits that go to each tyre start from a common point where they are connected to one another.

However, the use of said valves conditions the fact that the tyres cannot be deflated from the control box, which is an inconvenient when the pressure of said tyres increases due to environmental conditions, for example, due to the increase in ambient temperature and its effects according to the Boyle-Mariotte gas law, and the system cannot then deflate them.

These systems known in the state of the art can inflate the tyres when a low ambient temperature causes their pressure to drop below the set value, for example, during a trip to a very cold place in winter.

When returning the vehicle to its usual warmer place, the pressure in the tyres will increase above the set value due to the increase in ambient temperature. The tyre pressure will increase even more than the set value if the same vehicle drives to a location that is even hotter than its usual location.

This means that in the end it will be relatively easy for the tyre pressure to exceed the preset value in the control box by 15%, which may negatively influence tyre wear and fuel consumption.

The present invention contributes to resolving the present problem, since it allows free inflation and also partial and controlled deflation of vehicle tyres in relation to a previously preset inflation pressure, in a simple, practical and effective manner.

### DESCRIPTION OF THE INVENTION

The present invention has been developed in order to provide a vehicle tyre pressure control system, comprising means for controlling and supplying pressure and deflation limiting valves that are in correspondence with each tyre of a vehicle; wherein the means for controlling and supplying pressure is in communication with each tyre through a separate conduit for each tyre, and is also enabled to supply a preset inflation pressure in the conduits; each limiting valve in turn being inserted and installed in the path of said conduits between the means for controlling and supplying pressure and the same tyres, and wherein each limiting valve comprises an inlet port and an outlet port arranged in each conduit; wherein the same limiting valve is enabled to exhibit a conditioned non-return capability in one sense and direction from the outlet port to the inlet port, and is also enabled to exhibit a conditioned bidirectional capability between the same inlet port and outlet port; said non-return capability and said bi-directional capability being conditioned according to a differential between the pressure at its outlet port and the preset inflation pressure supplied from the means for controlling and supplying pressure; so that if the pressure at its outlet port is greater than or equal to the preset inflation pressure or is less than within a certain preset percentage in relation to the same preset inflation pressure, the limiting valve exhibits a bidirectional capability between its same inlet port and its outlet port; and if the pressure at its outlet port is lower than the same preset inflation pressure by a percentage greater than that same certain preset percentage, the same limiting valve exhibits a non-return capability in one sense and direction from the outlet port to the inlet port.

Alternatively, in a vehicle tyre pressure control system, the deflation limiting valve comprises an internal non-return valve between the outlet port and the inlet port, an adjustable spring, an auxiliary pilot conduit from the outlet port, and an auxiliary communication conduit between the inlet port and the outlet port and which is linked in its placement to the adjustable spring.

Preferably, in the vehicle tyre pressure control system, the control and supply means is installed in the same vehicle.

Alternatively, a vehicle tyre pressure control system is installed on the same vehicle.

The vehicle tyre pressure control system of the invention basically consists of the use of a simple deflation limiting valve for each tyre, to allow its free inflation as is already known, but also to allow a controlled and partial deflation of for example 15% with respect to the previously set pressure.

This solution of the vehicle tyre pressure control system of the proposed invention allows a precise adjustment of the pressure in any circumstance of ambient temperature and, at the same time, prevents the pressure of all tyres from dropping excessively, for example, more than 15%, when there is a large air leak in one of them, for example, due to a blowout.

Upon replacement of the blown tyre, the vehicle tyre pressure control system of the present invention automatically restores all of them to the initial set pressure.

The vehicle tyre pressure control system of the proposed invention represents a simple and relatively inexpensive solution that can be easily used in the technical sector.

Due to the present invention, a free inflation and also a partial and controlled deflation of the tyres of a vehicle in relation to a previously preset inflation pressure is achieved.

Other characteristics and advantages of the vehicle tyre pressure control system will be evident in light of the description of a preferred, but not exclusive embodiment, which is illustrated by way of non-limiting example in the drawings which are included in which:

### BRIEF DESCRIPTION OF THE DRAWINGS

Figure 1 is a schematic view of a system of those already known in the state of the art.
Figure 2 is a schematic view of a preferred embodiment of the vehicle tyre pressure control system of the present invention.
Figure 3 is a schematic view of a deflation limiting valve of a preferred embodiment of the vehicle tyre pressure control system of the present invention.

### DESCRIPTION OF A PREFERRED EMBODIMENT

In the state of the art, different systems for refilling vehicle tyre pressure are known.

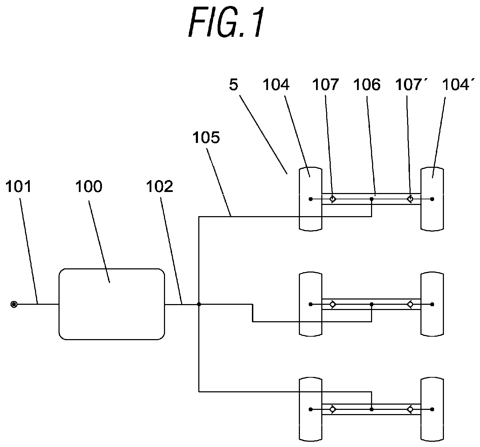

Figure 1 schematically represents a basic diagram of elements and connections that corresponds to the majority of vehicle tyre pressure refilling systems currently used and known in the state of the art.

A control box 100 is fed from the compressed air installation of the same vehicle through a supply conduit 101 and is responsible for regulating the pressure in the outlet conduit 102 towards the tyres 104, 104' according to preset pressure values.

The outlet conduit 102 can be divided into conduits that are directed towards each wheel axle of the vehicle, such as the conduit 105 of the first wheel axle 106, which in turn will communicate with the left tyre 104 through the non-return valve 107 and with the right tyre 104' through the non-return valve 107'.

Said non-return valves 107, 107' allow air to enter the tyre 104, 104' to inflate same, but prevent air from exiting the same tyre 104, 104' to deflate same. It is a safety measure to prevent all the tyres 104, 104' from deflating if one of them suffers a large loss of air (blowout), since the air pipes 105 that go to each tyre 104, 104' start from a common conduit 102 where they are connected to one another.

However, the use of said valves 107, 107' conditions the fact that the tyres 104, 104' cannot be deflated from the control box 100, which is an inconvenient when the pressure of said tyres increases due to the increase in ambient temperature (Boyle-Mariotte Law) and the system cannot deflate them to maintain the preset pressure value.

The vehicle tyre pressure control system of the present invention solves all this problems, since it also allows a controlled drop in tyre pressure when required.

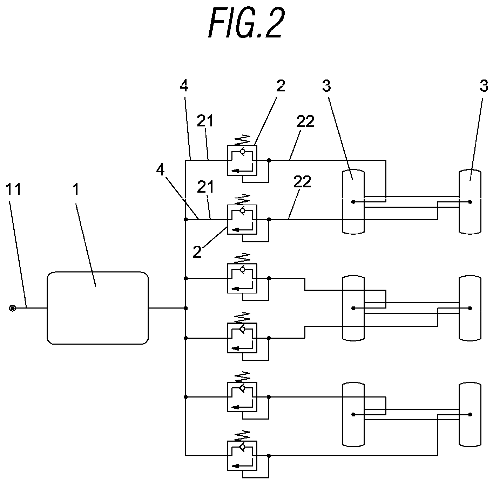

As can be schematically seen in Figure 2, the vehicle tyre pressure control system of the present invention comprises a means for controlling 1 and supplying pressure and deflation limiting valves 2 that are in correspondence with each vehicle tyre 3.

The means for controlling 1 and supplying pressure is in communication with each tyre 3 through a separate conduit 4 for each tyre 3.

The same means for controlling 1 and supplying pressure is also enabled to supply a preset inflation pressure in said conduits 4, said inflation pressure value being previously introduced in said means for controlling 1 and supplying pressure.

Likewise, each limiting valve 2 is inserted and installed in the path of said conduits 4, and they are specifically arranged between the means for controlling 1 and supplying pressure and the same tyres 3, as can be seen in figure 2.

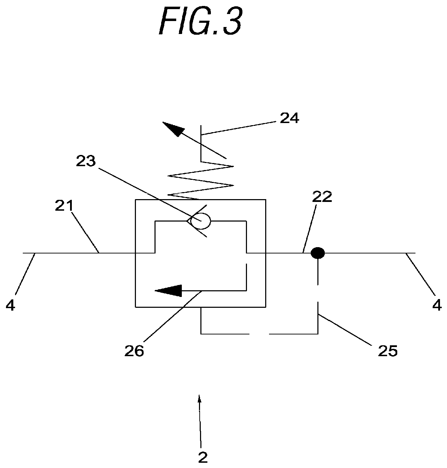

Moreover, each limiting valve 2 comprises an inlet port 21 and an outlet port 22 arranged in each conduit 4, as also detailed in Figure 3.

The limiting valve 2 comprised in the vehicle tyre pressure control system of the invention, is at the same time enabled to have a conditioned non-return capability in one sense and direction from its outlet port 22 to the inlet port 21, and also and simultaneously it is enabled to have a conditioned bidirectional capability between the same inlet port 21 and outlet port 22.

The aforementioned non-return and bi-directional capabilities in the limiting valve 2 are conditioned according to the difference in pressure at its outlet port 22 and the preset inflation pressure supplied from the means for controlling 1 and supplying pressure.

This is so that if the pressure at the outlet port 22 of the limiting valve 2 is greater than or equal to the pre-set inflation pressure, or is lower within a certain preset percentage in relation to the same preset inflation pressure, then the limiting valve 2 has a bidirectional capability between its same inlet port 21 and its outlet port 22.

However, if the pressure at its outlet port 22 decreases and is lower than the same preset inflation pressure, but exceeding in its decrease that same aforementioned certain preset percentage, the same limiting valve 2 then has a non-return capability in a sense and direction from its outlet port 22 to its inlet port 21.

As has already been mentioned, the means for controlling 1 and supplying pressure can be installed in the same vehicle, and then it can be fed from the compressed air installation of the same vehicle through a supply conduit 11 and is responsible for regulating the pressure in the outlet conduits 4 towards the tyres 3 according to preset pressure values.

The outlet conduits 4 are directed towards each of the tyres 3 of the vehicle, through the corresponding deflation limiting valve 2.

In this preferred embodiment of the tyre pressure control system of a vehicle of the invention, and as schematically represented in figure 3, the deflation limiting valve 2 comprises an internal non-return valve 23 arranged between the outlet 22 and the inlet port 21, an adjustable spring 24, an auxiliary pilot conduit 25 from the outlet port 22, and an auxiliary communication conduit 26 movable between the inlet port 21 and the outlet port 22 and which is linked in its placement to the adjustable spring 24.

The compressed air from the means for controlling 1 and supplying pressure enters the inlet port 21 of the limiting valve 2 through the conduit 4 and flows freely in the direction of the outlet port 22 after passing through the internal non-return valve 23.

The pressure at the outlet port 22, through the auxiliary pilot conduit 25, can displace the auxiliary communication conduit 26 overcoming the resistance of the adjustable spring 24, thus establishing a bi-directional communication between the inlet 21 and outlet 22 ports through said auxiliary communication conduit 26.

If the limiting valve 2 is adjusted so that this bidirectional communication is produced from a pressure slightly lower than the preset inflation pressure in the means for controlling 1 and supplying pressure, for example 15% lower and regulating the adjustable spring 24, it is achieved that said means for controlling 1 and supplying pressure can carry out the deflation of the tyres until the pressure in same has dropped to a set value in the deflation limiting valve 2.

Therefore, the vehicle tyre pressure control system of the invention allows an accurate adjustment of the pressure in any circumstance and even a controlled drop in the pressure of the tyres 3, regardless of the ambient temperature, for example, and at the same time, it prevents the pressure of all the tyres 3 from dropping excessively, for example, up to 15%, when a large air leak occurs in one of them, for example, due to a blowout.

After the replacement of the burst tyre, the vehicle tyre pressure control system of the invention can automatically restore the initial preset inflation pressure for all tyres 3.

The details, shapes, dimensions and other accessory elements, as well as the materials used to manufacture the vehicle tyre pressure control system of the invention, may be suitably substituted for others which do not diverge from the scope defined by the claims included below.

## Claims

1. A vehicle tyre pressure control system, comprising means for controlling (1) and supplying pressure and deflation limiting valves (2) that are in correspondence with each tyre (3) of a vehicle; wherein the means for controlling (1) and supplying pressure is in communication with each tyre (3) through a separate conduit (4) for each tyre (3), and is also enabled to supply a preset inflation pressure in the conduits (4); each limiting valve (2) in turn being inserted and installed in the path of said conduits (4) between the means for controlling (1) and supplying pressure and the same tyres (3), and wherein each limiting valve (2) comprises an inlet port (21) and an outlet port (22) arranged in each conduit (4); wherein the same limiting valve (2) is enabled to exhibit a conditioned non-return capability in one sense and direction from the outlet port (22) to the inlet port (21), and is also enabled to exhibit a conditioned bidirectional capability between the same inlet port (21) and outlet port (22); said non-return capability and said bidirectional capability being conditioned according to a differential between the pressure at its outlet port (22) and the preset inflation pressure supplied from the means for controlling (1) and supplying pressure; so that if the pressure at its outlet port (22) is greater than or equal to the preset inflation pressure or is less than within a certain preset percentage in relation to the same preset inflation pressure, the limiting valve (2) exhibits a bidirectional capability between its same inlet port (21) and its outlet port (22); and if the pressure at its outlet port (22) is lower than the same preset inflation pressure by a percentage greater than that same certain preset percentage, the same limiting valve (2) exhibits a non-return capability in one sense and direction from the outlet port (22) to the inlet port (21), wherein the pressure at the outlet port (22), through an auxiliary pilot conduit (25), can displace an auxiliary communication conduit (26) of the limiting valve (2) overcoming the resistance of an adjustable spring (24),
**characterised in that** the bi-directional capability is thereby established between the inlet (21) and outlet (22) ports through said auxiliary communication conduit (26).

2. The vehicle tyre pressure control system according to claim 1, wherein the deflation limiting valve (2) comprises an internal non-return valve (23) between the outlet port (22) and the inlet port (21), an adjustable spring (24), an auxiliary pilot conduit (25) from the outlet port (22), and an auxiliary communication conduit (26) between the inlet port (21) and the outlet port (22) and which is linked in its placement to the adjustable spring (24).

3. The vehicle tyre pressure control system according to any of the preceding claims, wherein the means for controlling (1) and supplying pressure is installed in the same vehicle.

4. The vehicle tyre pressure control system according to claim 3, which is installed in the same vehicle.

## Patentansprüche

1. Reifendruckkontrollsystem für Fahrzeuge, umfassend ein Mittel zur Drucksteuerung und -zufuhr (1) und Luftablassbegrenzungsventile (2), die jeweils einem Reifen (3) eines Fahrzeugs zugeordnet sind; wobei das Mittel zur Drucksteuerung und -zufuhr (1) mit jedem Reifen (3) über eine separate Leitung (4) für jeden Reifen (3) in Verbindung steht und zudem einen voreingestellten Aufblasdruck in den Leitungen (4) bereitstellen kann; wobei jedes Begrenzungsventil (2) seinerseits in dem Weg der Leitungen (4) zwischen dem Mittel zur Drucksteuerung und -zufuhr (1) und den Reifen (3) eingesetzt und installiert ist, und wobei jedes Begrenzungsventil (2) einen Einlassanschluss (21) und einen Auslassanschluss (22) umfasst, die in jeder Leitung (4) angeordnet sind; wobei das Begrenzungsventil (2) so beschaffen ist, dass es in einer Richtung vom Auslassanschluss (22) zum Einlassanschluss (21) eine bedingte Rückschlagsicherung aufweist und gleichzeitig zwischen demselben Einlassanschluss (21) und Auslassanschluss (22) eine bedingte bidirektionale Funktion ermöglicht; die Rückschlagsicherung und die bidirektionale Funktion werden durch die Differenz zwischen dem Druck an dem Auslassanschluss (22) und dem voreingestellten Aufblasdruck, der von dem Mittel zur Drucksteuerung und -zufuhr (1) bereitgestellt wird, bedingt; so dass das Begrenzungsventil (2) eine bidirektionale Funktion zwischen seinem Einlassanschluss (21) und seinem Auslassanschluss (22) aufweist, wenn der Druck an seinem Auslassanschluss (22) größer oder gleich dem voreingestellten Aufblasdruck ist oder innerhalb eines bestimmten voreingestellten Prozentsatzes in Bezug auf den gleichen voreingestellten Aufblasdruck geringer ist; und wenn der Druck an seinem Auslassanschluss (22) um einen Prozentsatz niedriger ist als der gleiche voreingestellte Aufblasdruck, weist das Begrenzungsventil (2) eine Rückschlagsicherung in einer Richtung von dem Auslassanschluss (22) zum Einlassanschluss (21) auf, wobei der Druck an dem Auslassanschluss (22) über eine Hilfssteuerleitung (25) eine Hilfsverbindungsleitung (26) des Begrenzungsventils (2) unter Überwindung des Widerstands einer einstellbaren Feder (24) verschieben kann,
**dadurch gekennzeichnet, dass** die bidirektionale Funktion zwischen dem Einlass- (21) und dem Auslassanschluss (22) durch die genannte Hilfsverbindungsleitung (26) hergestellt wird.

2. Reifendruckkontrollsystem für Fahrzeuge nach Anspruch 1, wobei das Luftablassbegrenzungsventil (2) ein internes Rückschlagventil (23) zwischen dem Auslassanschluss (22) und dem Einlassanschluss (21), eine einstellbare Feder (24), eine Hilfssteuerleitung (25) vom Auslassanschluss (22) und eine Hilfsverbindungsleitung (26) zwischen dem Einlassanschluss (21) und dem Auslassanschluss (22) umfasst, die in ihrer Position mit der einstellbaren Feder (24) verbunden ist.

3. Reifendruckkontrollsystem für Fahrzeuge nach einem der vorhergehenden Ansprüche, wobei das Mittel zur Drucksteuerung und -zufuhr (1) im Fahrzeug installiert ist.

4. Reifendruckkontrollsystem für Fahrzeuge nach Anspruch 3, das im Fahrzeug installiert ist.

## Revendications

1. Système de commande de pression de pneu de véhicule, comprenant un moyen de commande (1) et d'alimentation en pression et des valves de limitation de dégonflage (2) qui sont en correspondance avec chaque pneu (3) d'un véhicule ; dans lequel le moyen de commande (1) et d'alimentation en pression est en communication avec chaque pneu (3) par l'intermédiaire d'un conduit séparé (4) pour chaque pneu (3), et est également apte à alimenter une pression de gonflage préréglée dans les conduits (4) ; chaque valve de limitation (2) étant à son tour insérée et installée dans le trajet desdits conduits (4) entre le moyen de commande (1) et d'alimentation en pression et les mêmes pneus (3), et dans lequel chaque valve de limitation (2) comprend un orifice d'entrée (21) et un orifice de sortie (22) agencés dans chaque conduit (4) ; dans lequel la même valve de limitation (2) est apte à présenter une capacité de non-retour conditionnée dans un sens et une direction de l'orifice de sortie (22) à l'orifice d'entrée (21), et est également apte à présenter une capacité bidirectionnelle conditionnée entre le même orifice d'entrée (21) et orifice de sortie (22) ; ladite capacité de non-retour et ladite capacité bidirectionnelle étant conditionnées selon un différentiel entre la pression au niveau de son orifice de sortie (22) et la pression de gonflage préréglée alimentée par le moyen de commande (1) et d'alimentation en pression ; de sorte que si la pression au niveau de son orifice de sortie (22) est supérieure ou égale à la pression de gonflage préréglée ou est inférieure à au sein d'un certain pourcentage préréglé par rapport à la même pression de gonflage préréglée, la valve de limitation (2) présente une capacité bidirectionnelle entre son même orifice d'entrée (21) et son orifice de sortie (22) ; et si la pression au niveau de son orifice de sortie (22) est inférieure à la même pression de gonflage préréglée d'un pourcentage supérieur à ce même certain pourcentage préréglé, la même valve de limitation (2) présente une capacité de non-retour dans un sens et une direction de l'orifice de sortie (22) à l'orifice d'entrée (21), dans lequel la pression au niveau de l'orifice de sortie (22), par l'intermédiaire d'un conduit pilote auxiliaire (25), peut déplacer un conduit de communication auxiliaire (26) de la valve de limitation (2) en surmontant la résistance d'un ressort réglable (24),
**caractérisé en ce que** la capacité bidirectionnelle est ainsi établie entre les ports d'entrée (21) et de sortie (22) par l'intermédiaire dudit conduit de communication auxiliaire (26).

2. Système de commande de pression de pneu de véhicule selon la revendication 1, dans lequel la valve de limitation de dégonflage (2) comprend une valve de non-retour interne (23) entre l'orifice de sortie (22) et l'orifice d'entrée (21), un ressort réglable (24), un conduit pilote auxiliaire (25) à partir de l'orifice de sortie (22), et un conduit de communication auxiliaire (26) entre l'orifice d'entrée (21) et l'orifice de sortie (22) et qui est lié dans son placement au ressort réglable (24).

3. Système de commande de pression de pneu de véhicule selon l'une quelconque des revendications précédentes, dans lequel le moyen de commande (1) et d'alimentation en pression est installé dans le même véhicule.

4. Système de commande de pression de pneu de véhicule selon la revendication 3, qui est installé dans le même véhicule.
